# EUROPÄISCHE PATENTSCHRIFT

(11) **EP 2 229 293 B1**
(45) Veröffentlichungstag und Bekanntmachung des Hinweises auf die Patenterteilung: **12.09.2012**
(21) Anmeldenummer: 08860273.5
(22) Anmeldetag: 23.10.2008
(51) Int. Cl.: B60R 21/01

(54) **VERFAHREN UND ANORDNUNG ZUR ANSTEUERUNG VON SICHERHEITSMITTELN FÜR EIN FAHRZEUG**
METHOD AND DEVICE FOR ACTUATING SAFETY MEANS FOR FOR A VEHICLE
PROCÉDÉ ET DISPOSITIF POUR COMMANDER DES MOYENS DE SÉCURITÉ POUR UN VÉHICULE

(30) Priorität: 10.12.2007 DE 102007059414
(43) Veröffentlichungstag der Anmeldung: 22.09.2010
(73) Patentinhaber: Robert Bosch GmbH, 70442 Stuttgart (DE)
(72) Erfinder: BECKER, Jens, 73249 Wernau (DE); LICH, Thomas, 71409 Schwaikheim (DE); DOERR, Alfons, 70597 Stuttgart (DE); KOLATSCHEK, Josef, 71263 Weil Der Stadt (DE); HIEMER, Marcus, 71701 Schwieberdingen (DE)
(86) Internationale Anmeldenummer: PCT/EP2008/064331
(87) Internationale Veröffentlichungsnummer: WO 2009/074391

(56) Entgegenhaltungen:
- WO-A-2004/098939
- DE-A1- 10 360 666
- DE-A1- 19 833 242
- DE-A1-102005 012 119

## Beschreibung

### Stand der Technik

Die Erfindung betrifft ein Verfahren zur Ansteuerung von Sicherheitsmitteln für ein Fahrzeug bzw. eine entsprechende Anordnung.

Aus DE 101 49 112 A1 geht bereits ein Verfahren zur Bildung einer Auslöseentscheidung für ein Rückhaltesystem hervor, wobei insbesondere Soil Trips behandelt werden. Unter Soil Trips versteht man Situationen, in denen das Fahrzeug nach einem Schleudervorgang seitlich rutscht und dann auf einem Untergrund mit einem hohen Reibungskoeffizienten gerät, z. B. ein unbefestigter Untergrund neben einer Fahrbahn. Es wird die Auslöseentscheidung in Abhängigkeit von den Fahrdynamikdaten bestimmt, wobei als die Fahrdynamikdaten ein Schwimmwinkel in Verbindung mit einer Fahrzeugquergeschwindigkeit und einer Fahrzeugkippbewegung verwendet werden. Durch entsprechenden Schwellwertvergleich wird die Auslöseentscheidung dann gebildet.

Gemäß WO-2005/030536 A1 ist bereits ein Verfahren zur Bildung einer Auslöseentscheidung für ein Rückhaltesystem, insbesondere bei Überrollvorgängen bekannt. Dabei wird die Auslöseentscheidung in Abhängigkeit von Fahrdynamikdaten bestimmt, wobei als Fahrdynamikdaten die Querbeschleunigung und die Drehrate um die Fahrzeuglängsachse verwendet werden.

Aus DE 10 2004 021174 A1 ist bereits ein Verfahren zur Bildung einer Auslöseentscheidung für sicherheitsrelevante Komponenten eines Fahrzeugs bekannt, wobei das auszulösende Sicherheitssystem präventiv aktiviert wird. Dabei erfolgt die Ansteuerung in Abhängigkeit wenigstens eines vordefinierten und adaptierbaren, sowie eine fahrsicherheitskritische Fahrdynamik charakterisierenden Schwellwerts derart, dass der Schwellwert an die fahrerseitige Leistungsanforderung gekoppelt ist. Die dabei genannten fahrdynamischen Größen sind Sensoren aus dem ABS-Regelsteuergerät, wie Raddrehzahlsensoren, einem Gierratensensor oder einem Umgebungssensor. Dadurch wird ein sicherheitskritisches Fahrverhalten des Fahrzeugs bewertet.

Aus DE 100 61 040 A1 ist es bekannt, Rückhaltemittel in Abhängigkeit von Signalen einer Fahrdynamikregelung, wie es ESP ist, anzusteuern. Dabei erfolgt die Auslösung eines reversiblen Gurtstraffers direkt in Abhängigkeit von der Erkenntnis einer sicherheitskritischen Situation, die durch das ESP erkannt wird.

Aus WO-2004/094195 A1 ist eine Vorrichtung zur Ansteuerung von Rückhaltesystemen bekannt, wobei die Ansteuerung der Rückhaltemittel in Abhängigkeit von einem Signal einer Fahrdynamikregelung erfolgt. Als wesentlicher Kern wird dabei benannt, dass das Signal der Fahrdynamikregelung verwendet wird, wenigstens eines Schwellwerts bei einem Schwellwertvergleich eines Signals eines Unfallsensors zu beeinflussen.

Aus WO-2005/073735 A1 ist ein Verfahren bekannt, das mittels Signalen von verteilten linearen Beschleunigungssensoren eine Drehinformation bestimmt. Dadurch wird ermöglicht, beispielsweise die Gierung eines Fahrzeugs auf Basis linearer Beschleunigungsinformationen zu bestimmen.

Aus DE 10 2005 012 119 B4 ist eine Fahrzeugunfallanalysevorrichtung bekannt, die neben der Längs- und Querbeschleunigung auch die Gierbeschleunigung verwendet. Kern ist die Bestimmung von Crashparametern nach dem Crash, also nachdem die Auslöseentscheidung getroffen wurde. Als bestimmte Parameter werden die Aufprallstelle, die Aufprallkraft sowie der Aufprallwinkel genannt.

Aus DE 103 60 666 A1 sind Koordinationsmittel bekannt, durch die die Charakteristik der Antriebs- und Bremssteuerung abhängig von einem dynamischen Zustand des Kraftfahrzeugs geändert wird. Der dynamische Zustand kann über die Gierbeschleunigung bestimmt werden.

Nachteilig an den im Stand der Technik beschriebenen Personenschutzsystemen ist, dass im Crashverlauf wirkende Drehmomente nur unzureichend erfasst werden.

### Offenbarung der Erfindung

Das erfindungsgemäße Verfahren bzw. die erfindungsgemäße Anordnung zur Ansteuerung von Sicherheitsmitteln für ein Fahrzeug mit den Merkmalen der unabhängigen Patentansprüche haben demgegenüber den Vorteil, dass primär die Gierbeschleunigung dazu verwendet wird, das Ansteuersignal für die Sicherheitsmittel zu bilden. Die Gierbeschleunigung zeigt im Vergleich beispielsweise zur Gierrate überraschend viele Informationen, die der Gierrate nicht entnommen werden können. Mit diesen zusätzlichen Informationen kann insbesondere in dem Crashszenario eines Folgecrashs ein effektiverer Schutz erreicht werden. Dabei ist beispielsweise solch ein Fall zu berücksichtigen, dass ein erster Nichtauslösecrash vorliegt, das ist ein Aufprall, der so schwach ist, dass er keine Auslösung von Personenschutzmitteln benötigt, aber solche Momente um die Hochachse induziert, die mögliche gefährliche Folgecrashs hervorrufen können. Dies kann durch eine Auswertung der Gierbeschleunigung effektiv erreicht werden.

Erfindungsgemäß wird das wenigstens eine Gierbeschleunigungssignal derart erzeugt, dass das wenigstens eine Gierbeschleunigungssignal mittels einer Minimalvarianzmethode bestimmt wird. Dazu kann beispielsweise auch der sogenannte RLS-Schätzer verwendet werden.

Die Drehbeschleunigung wird demnach aus den gemessenen Drehratensignalen abgeleitet und die Minimalvarianzmethode wird dafür verwendet. Ein solcher Minimalvarianzschätzer vermeidet die Verstärkung von hochfrequenten Signalanteilen und somit eine suboptimale Bestimmung der zeitlichen Änderung des Beschleunigungssignals.

Eine besonders vorteilhafte Ausprägung dieses Minimalvarianzschätzers ist der sogenannte Least-Square-Schätzer. Dieser Least-Square-Schätzer ist rekursiv ausgebildet. Dies ermöglicht Einsparungen bei Laufzeit und Speicher in einem Steuergerätealgorithmus. Bei jeder neuen Schätzung wird dabei lediglich der letzte Schätzwert unter Einbeziehung der statistischen Eigenschaften des Signals korrigiert, so dass der Begriff rekursiv damit erklärt ist. Diese rekursive Vorgehen spart damit Rechenleistung. Ein rekursives Least-Square-Verfahren ist in der Literatur beispielsweise in U. Kiencke und L. Nielsen: Automotive Control Systems, Springerverlag, zweite Auflage, 2004, beschrieben.

Der Minimalvarianzschätzer bzw. der Least-Square-Schätzer können hard - und/oder softwaremäßig ausgebildet sein.

Darüber hinaus ist es von Vorteil, dass die Gierbeschleunigung mit einer hohen Abtastrate bzw. einer geringen Abtastperiode von kleiner als 10 ms ermöglicht wird. Damit werden Latenzeiten vermieden, die beispielsweise dann gegeben sind, wenn die Sensorsignale über einen Bus zum Airbagsteuergerät gelangen, beispielsweise von einem Fahrdynamikregelungssteuergerät. Damit kann dann beispielsweise eine Abtastzeit im Bereich von 1 ms und so liegt eine nützliche Eingabeinformation zur Ansteuerung und algorithmischer Auswertung irreversibler Rückhaltesysteme wie Airbags vor.

Insgesamt ist durch die Berücksichtigung der Gierbeschleunigung im Kollisionsfall zusätzlich zur Beobachtung der linearen Fahrzeugbewegung eine ganzheitliche Erfassung dieser Fahrzeugbewegung möglich. Damit können insbesondere reale Crashszenarien, wie oben beschrieben, detaillierter erfasst und entsprechend klarer klassifiziert werden. Dieser Informationsumfang kann dazu benutzt werden, die Gesamtstrategie für die Aktivierung der Personenschutzmittel bzw. Sicherheitsmittel entsprechend dem umfassend erfassten Crashverlauf anzupassen und damit die Schutzwirkung insgesamt zu steigern. Dadurch kann eine Robustheit und Zuverlässigkeitserhöhung im Feld erreicht werden. Des Weiteren kann beispielsweise der Crashverlauf von Fahrzeugüberschlägen besser vorhergesagt werden und die Auslöseanforderung an die zu aktivierenden Rückhaltemittel entsprechend angepasst werden.

Beispielsweise tritt bei einem Frontalcrash mit einer Winkelkomponente in einer frühen Crashphase ein deutliches Gierbeschleunigungssignal auf, das zur Crashdiskriminierung verwendet werden kann. Dies zeigt, dass bereits in standardisierten Crashtests die Crashklassifizierungsgüte gesteigert werden kann. Auch eine Crashdiskriminierung in einer Gierwinkel-Gierratenebene ist möglich und unterstreicht das Potential zur Unterscheidung von Crashverläufen unter Zuhilfenahme unterschiedlichster Crashmerkmale.

Ausgehend von der Erfindung erreicht man eine deutlich bessere Klassifizierung von realen Crashszenarien, wie Multicrashes, crashinduzierte Rollover, Seitenkollisionen mit Schleudervorgeschichte oder nicht mittige Frontalcrashes gegen schmale Objekte. Der zu erwartende Crashverlauf wird hinsichtlich dem Einsatz geeigneter Sicherheitsmittel besser eingeschätzt. Neben der Ansteuerung der Zündkreise für die Personenschutzmittel ist es möglich, auf Basis der zur Verfügung stehenden Gierbeschleunigungssignale auch lenk- oder radselektive Bremseingriffe anzutriggern, mit Hilfe derer das Fahrzeug bei leichten Kollisionen stabilisiert werden kann und womit die Crashwahrscheinlichkeit und Crashschwere von Sekundärkollisionen verringert werden kann. Es ist zusätzlich denkbar, eine Vorrichtung anzusteuern, die im Fall von Crashs mit geringem Überlapp für ein Einhaken der Kollisionskontrahenten sorgt, um die Verletzungsschwere der Insassen zu lindern.

Die Hinzunahme der Gierbeschleunigung erlaubt die Bereitstellung von Informationen nicht erst vor dem Crash, sondern auch im Crash, was die Algorithmusneukonditionierung für eventuelle Nachfolgecrashes ermöglicht und damit die Behandlung von Multicrashes verbessert, beispielsweise durch die Integration der Gierrate erhält man einen Gierwinkel und dadurch eine Ausrichtung des Fahrzeugs nach einer Primärkollision und damit entscheidende Informationen für mögliche Folgeereignisse.

Es ist vorteilhaft, den Einbau beispielsweise des Steuergeräts mit der integrierten Gierbeschleunigungssensorik in der Nähe des Fahrzeugschwerpunktes vorzusehen. Jedoch ist prinzipiell auch jeder andere Einbauort geeignet, da die Gierbeschleunigungssignale durch geeignete mathematische Funktionen in den Schwerpunkt transformiert werden können.

Auf Basis des Klassifikationsergebnisses kann über ein Modell der Insassenposition und Insassenbewegung und Bewegungsrichtung der Zündzeitpunkt beeinflusst werden. Dieser kann beispielsweise früher oder später erfolgen oder aber ganz unterdrückt werden, falls die Schutzwirkung der Sicherheitsmittel, etwa bei Crashs mit geringem Überlapp, in welchem eine starke Fahrzeugdrehbewegung induziert wird, nicht mehr gegeben ist. Dadurch lässt sich ein mögliches Ableiten des Insassen am Frontairbag durch die auftretende Rotation verhindern. Gleichzeitig kann der im Falle günstigere Seiten- oder Curtainairbag aktiviert werden, um den Kopf des Insassen vor einem Aufprall auf die A-Säulenstrebe zu schützen. Auch ist vorstellbar, durch koordinierte Zündung von entsprechend ausgelegten Airbags vor und seitlich der Insassen ihre Bewegung gezielt so zu beeinflussen, dass eine maximale Schutzwirkung erreicht wird.

Vorliegend kann die Anordnung beispielsweise ein Steuergerät sein, das die Sensorsignale verarbeitet und in Abhängigkeit davon das Ansteuersignal erzeugt. Der Ansteuerung wird die Aktivierung der Sicherheitsmittel, wie passive Rückhaltemittel, beispielsweise Airbags oder Gurtstraffer oder crashaktive Kopfstützen, aber auch aktive Personenschutzmittel, wie eine Fahrdynamikregelung oder Bremsen verstanden. Auch Lenkeingriffe werden hierunter subsumiert.

Die Sensorik ist üblicherweise eine Gierratensensorik, wobei durch einen Wandler das Gierbeschleunigungssignal dann erzeugt wird. Dazu zählt beispielsweise ein einfacher Differenzierer, der softwaretechnisch und/oder hardwaremäßig realisiert wird. Das wenigstens eine Gierbeschleunigungssignal gibt die Gierbeschleunigung um die Fahrzeughochachse an.

Das Abtasten der Gierbeschleunigung ist das Abtasten, das gemäß der Nachrichtentechnik vorgenommen wird, um ein Signal zu erfassen. Die Abtastzeit ist das Inverse der Abtastrate. Dafür kann die Auswerteschaltung, beispielsweise ein Mikrocontroller oder ein anderer Prozessor verwendet werden. Für die Auswerteschaltung sind alle möglichen hardware- und softwaremäßigen Realisierungen denkbar.

Das Ansteuersignal ist beispielsweise ein Zündstrom, es kann sich jedoch ach um ein Datensignal handeln, das einem anderen, beispielsweise Steuergerät, mitteilt, welche entsprechenden Schutzmittel, hier eine Bremse, anzusteuern sind. Daher ist die Bedeutung dieses Begriffs "Ansteuersignal" sehr breit, es kann sich auch beispielsweise um ein Plausibilisierungssignal handeln.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. der in den unabhängigen Patentansprüchen angegebenen Anordnung zur Ansteuerung von Sicherheitsmitteln für ein Fahrzeug möglich.

Es ist vorteilhaft, dass zur Ausgabe des Ansteuersignals eine Kommunikationsschnittstelle zum Senden und Empfangen von Daten vorgesehen ist. Eine solche Kommunikationsschnittstelle kann hard- und/oder softwaremäßig ausgebildet sein. Beispielsweise kann sie als sogenannter Buscontroller bzw. Bustranceiver, beispielsweise für den CAN-Bus ausgebildet sein. Es ist jedoch möglich, dass die Kommunikationsschnittstelle damit auch als Punkt-zu-Punkt-Verbindung mit einem externen Gerät vorgesehen sein kann. Damit kann beispielsweise das Ansteuersignal als Datum an ein anderes Steuergerät, wie beispielsweise die Fahrdynamikregelung, übertragen werden, so dass die Fahrdynamikregelung Maßnahmen ergreift, um das Fahrzeug für die Gefahr einer Sekundär- oder Mehrfachkollision zu stabilisieren. Dies zeigt die Breite der Bedeutung des Begriffs "Ansteuersignal", das nicht nur aber auch ein Zündstrom, beispielsweise zur Aktivierung eines oder mehrerer Airbags sein kann.

Darüber hinaus ist es von Vorteil, dass das Ansteuersignal von einem Ansteuerungsalgorithmus als Plausibilisierung oder als Schwellwertbeeinflussung verwendet wird. D. h. es liegt ein Ansteuerungsalgorithmus vor, der in Abhängigkeit beispielsweise von anderen Sensorsignalen, wie von Beschleunigungssignalen oder Wankratensignalen, Körperschallsignalen oder Luftdrucksignalen festlegt, ob und welche und wann die Personenschutzmittel als Sicherheitsmittel angesteuert werden sollen. Das Ansteuersignal dient dabei als Plausibilisierung, d. h. als unabhängiger Auswertepfad zumindest bezüglich der Sensorik, ob eine Kollision vorliegt oder nicht. Weiterhin kann vorgesehen sein, dass das Ansteuersignal einen oder mehrere Schwellwerte im Ansteuerungsalgorithmus beeinflusst, d. h. dies führt zu einer Schärfer- oder Unschärferschaltung dieser Schwellwerte, beispielsweise wenn das Ansteuersignal anzeigt, dass eine sehr gefährliche Situation vorliegt. Dann werden die Schwellwerte abgesenkt, um eine frühe Ansteuerung der Personenschutzmittel zu ermöglichen. Um einen solchen unabhängigen Auslösepfad zu realisieren, kann das Ansteuersignal durch die Auswerteschaltung erzeugt werden, wobei dann die Auswerteschaltung nicht auch den Ansteuerungsalgorithmus ausrechnet, um die Unabhängigkeit zu gewährleisten. Beispielsweise können hierfür Dual-Core-Prozessoren verwendet werden. Jede mögliche Realisierung eines solchen unabhängigen Auslösepfads ist möglich. Wie gesagt reicht vorliegend eine Unabhängigkeit bezüglich der Sensoren, so dass auch auf dem gleichen Rechnerkern die Plausibilisierung und der Ansteuerungsalgorithmus ausgerechnet werden können.

Es ist weiterhin vorteilhaft, dass das Gierbeschleunigungssignal oder ein davon abgeleitetes Signal, wobei dieses abgeleitete Signal das Gierbeschleunigungssignal sein kann, in einen wenigstens dreidimensionalen Vektor eingeht und das Ansteuersignal in Abhängigkeit von einer Klassifizierung dieses wenigstens einen dreidimensionalen Vektors erzeugt wird. Durch einen wenigstens dreidimensionalen Vektor wird eine sehr gute Klassifizierung erreicht. Dieser dreidimensionale Vektor weist drei Komponenten auf, d. h. drei Merkmale, die von Sensorsignalen abgeleitet wurden, wozu das Gierbeschleunigungssignal gehört. Ableitung bedeutet beispielsweise Filterung, Integration, Mittelwertbildung, mehrfache Integration usw. In den Vektor können neben dem Gierbeschleunigungssignal auch andere Drehbewegungssignale oder auch Beschleunigungssignale oder davon abgeleitete Signale eingehen. Umso mehr Komponenten der Vektor hat, umso genauer kann die Klassifizierung sein. Diese Klassifizierung kann beispielsweise mittels einer Support-Vektormaschine, einem neuronalem Netz mit Markov-Modellen, Entscheidungsbäumen, evolutionären Algorithmen, Gaussprozessen oder andersartigen lernbasierten Klassifikatoren klassifiziert werden. Die Verwendung eines zumindest dreidimensionalen Klassifikators ist von Vorteil, da bei der universellen Betrachtung von Fahrzeugkollision in der Fahrzeugebene der Bewegungszustand des kollidierenden Fahrzeugs durch die drei linear unabhängigen Zustandsvektoren der longitudinalen und lateralen Bewegung des Schwerpunkts sowie der Gierbewegung eindeutig beschrieben wird und dadurch eine bestmögliche Klassifizierung des aktuellen Crashzustands ermöglicht wird.

Es ist weiterhin vorteilhaft, dass in Abhängigkeit von dem wenigstens einen Gierbeschleunigungssignal und wenigstens einem weiteren Sensorsignal ein Nichtauslösecrash erkannt und derart bewertet wird, dass die Sicherheitsmittel in Abhängigkeit von dem Ansteuersignal angesteuert werden, so dass ein Schutz vor wenigstens einem Folgecrash erreicht wird. Dies beschreibt, wie das Gierbeschleunigungssignal und ein weiteres Sensorsignal, beispielsweise ein Beschleunigungssignal, einen Nichtauslösecrash erkennen, und die Bewegung, die dieser Nichtauslösecrash beim Fahrzeug induziert, bewerten, um vor Folgekollisionen zu schützen.

Es ist weiterhin vorteilhaft, dass als das wenigstens eine Sensorsignal ein Gierwinkel verwendet wird. Der Gierwinkel gibt nämlich an, in welcher Richtung dann das Fahrzeug ausgerichtet ist, so dass damit wahrscheinlich ist, welche Personenschutzmittel für die Folgecrashs angesteuert werden müssen. Auch eine Schärferschaltung von Algorithmen für diese Folgecrashs kann in Abhängigkeit von diesen Größen vorgenommen werden.

Es ist weiterhin vorteilhaft, dass in Abhängigkeit von dem Ansteuersignal zumindest eines der weiteren Sensorsignale bewertet wird. Dies bedeutet, dass mit Hilfe der Gierbeschleunigung die Güte anderer im Steuergerät berechneter Signale verbessert wird. Liegt etwa eine Rotationsbewegung vor, so können durch die Rotation hervorgerufene fehlerhafte Signalanteile z. B. von peripheren Beschleunigungssensoren herausgerechnet werden.

Es ist schließlich auch von Vorteil, dass die Sensorik in einem Steuergerät mit der Auswerteschaltung eingebaut ist. Dies ermöglicht, die Signale der Sensorik hochfrequent abzutasten. Damit werden die hochfrequenten Abtastungen mit einer Abtastzeit kleiner 10 ms erreicht. Dies hat aber weiterhin die Vorteile, dass elektromagnetische Einflüsse bezüglich Störung reduziert werden. Außerdem ist von Vorteil, dass beim Einbau der Sensorik in das Airbagsteuergerät diese Sensorik von einer Notstromversorgung des Airbagsteuergeräts beispielsweise durch gespeicherte elektrische Energie in Kondensatoren profitiert. Dies verbessert die Güte der Gierbeschleunigungssignale, sowie deren Zuverlässigkeit.

Ausführungsbeispiele der Beschreibung sind in der Zeichnung dargestellt und werden in der nachfolgenden Beschreibung näher erläutert.

Es zeigen
Figur 1 ein Blockschaltbild der erfindungsgemäßen Anordnung mit angeschlossenen Komponenten,
Figur 2 eine typische Unfallsituation,
Figur 3 ein Signalablaufdiagramm,
Figur 4 ein Flussdiagramm,
Figur 5 ein weiteres Signalablaufdiagramm,
Figur 6 ein weiteres Flussdiagramm,
Figur 7 ein weiteres Signalablaufdiagramm und
Figur 8 ein Beispiel, welche Sensorsignale in den Algorithmus eingehen.

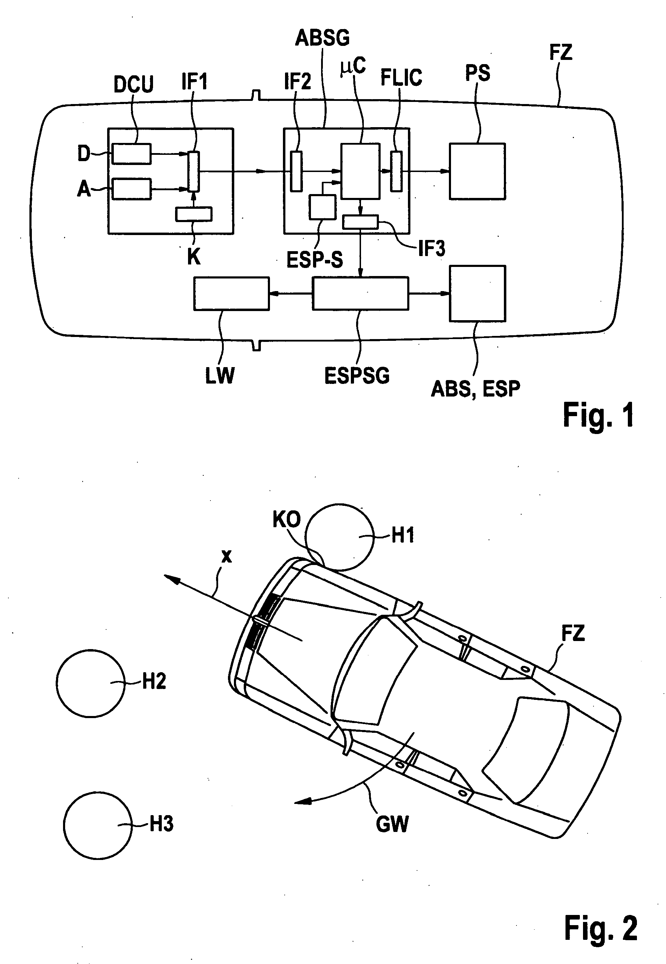

Figur 1 zeigt in einem Blockschaltbild die erfindungsgemäße Anordnung mit den angeschlossenen Komponenten. Ein Airbagsteuergerät ABSG als erfindungsgemäße Anordnung weist eine Auswerteschaltung, ausgebildet als Mikrocontroller µC auf, die Sensorsignale verarbeitet und in Abhängigkeit davon eine Zündkreisschaltung FLIC derart ansteuert, dass diese in Abhängigkeit von den Sensorsignalen Personenschutzmittel PS, wie Airbags oder Gurtstraffer, ansteuert. Weiterhin hat die Auswerteschaltung µC die Möglichkeit, über die Schnittstelle IF3 Ansteuersignale an ein weiteres Steuergerät ESPSG, also zur Fahrdynamikregelung, zu übertragen, so dass die Fahrdynamikregelung in Abhängigkeit von diesem Ansteuersignal den Lenkwinkel LW oder ein Bremssystem ABS bzw. eine Fahrdynamikregelung ESP entsprechend diesem Ansteuersignal ansteuert.

Die Sensorsignale werden zum einen über die Schnittstelle IF2 im Steuergerät ABSG bereitgestellt und zum anderen direkt von der Sensorik ESP-S. Die Sensorik ESP-S ist eine sogenannte ESP-Sensorik, die normalerweise in einem ESP-Steuergerät angeordnet ist. Diese Sensorik liefert beispielsweise die Gierrate ωz, Beschleunigungen in den Raumrichtungen, aber für niedrige Beschleunigungen, die Wankrate ωx sowie die Nickrate ωy. Niedrige Beschleunigung bedeutet beispielsweise unter 3g und ist damit abzugrenzen von den Beschleunigungssensoren für das Airbagsteuergerät, die Beschleunigungen von bis zu 30g beispielsweise erfassen. Wie oben angegeben, ist diese Sensorik im Airbagsteuergerät ABSG angeordnet, um eine hohe Abtastrate dieser Sensorwerte zu ermöglichen, so dass eine Berücksichtigung dieser Signale schnellstens erfolgen kann. Es ist möglich, das Airbagsteuergerät ABSG und das Fahrdynamikregelungssteuergerät ESPSG zu einem Steuergerät zu fusionieren.

Die Schnittstellen IF2, IF3 und auch die Zündkreisschaltung FLIC können in einem System-ASIC im Steuergerät ABSG vereinigt sein, d. h. auf zumindest einem integrierten Schaltkreis. Auf diesem System-ASIC können noch weitere Funktionen des Steuergeräts ABSG vorhanden sein, wie beispielsweise die Energieversorgung, die auch den Zündstrom für die Zündkreisschaltung FLIC betrifft. Die Schnittstellen IF2 und IF3 können auch softwaremäßig ausgebildet sein.

Weitere Komponenten, die für den Betrieb des Steuergeräts ABSG notwendig sind, sind der Einfachheit halber weggelassen worden. Beim Steuergerät ESPSG wurden die Komponenten ganz weggelassen, notwendig für die Funktion vorliegend sind Schnittstellen, sowie ein Prozessor, der die Entscheidung für die Ansteuerung in Abhängigkeit von dem Ansteuersignal trifft. Auch die Sensorsignale der Sensorik ESP-S können vom Airbagsteuergerät ABSG zum Fahrdynamiksteuergerät ESPSG übertragen werden, um dort verarbeitet zu werden.

Das Airbagsteuergerät ABSG kann weitere Sensoren in seinem Gehäuse aufweisen, wie beispielsweise Beschleunigungssensoren zur Erfassung eines Crashs. Vorliegend sind diese Sensoren jedoch in einem sogenannten Sensorsteuergerät DCU angeordnet, und zwar Drehratensensoren D, Beschleunigungssensoren A und Körperschallsensoren K. Diese werden über die Schnittstelle IF1 an die Schnittstelle IF2 im Airbagsteuergerät ABSG übertragen. Der Vorteil dieser Aufteilung in ein Sensorsteuergerät ist, dass das Airbagsteuergerät freier platzierbar ist. Das Sensorsteuergerät DCU kann dann beispielsweise auf dem Fahrzeugtunnel angeordnet sein und seine Sensormesswerte auch anderen Steuergeräten zur Verfügung stellen. Die Sensoren sind in der Regel mikromechanisch hergestellt, wobei im Sensorsteuergerät DCU auch eine Vorverarbeitung der Sensorsignale, beispielsweise eine Filterung, Integration usw. vorgesehen sein kann. Als Schnittstelle kann beispielsweise eine Stromschnittstelle verwendet werden, wobei die Daten auf einem Ruhestrom aufmoduliert werden, beispielsweise in einer Manschestercodierung.

Figur 2 zeigt eine typische Unfallsituation. Das Fahrzeug FZ kollidiert vorne an der Seite KO mit dem Hindernis K1. Dies induziert ein Drehmoment, d. h. eine Gierbeschleunigung in Richtung GW. Die Fahrrichtung ist mit X bezeichnet. Dieses Drehmoment birgt die Gefahr, dass das Fahrzeug FZ sich derart dreht, dass es zumindest gegen eins der Hindernisse H2 und H3 in einer Folgekollision kollidieren kann. In einer weiteren Folge kann dann eine weitere Kollision wiederum mit dem Hindernis H1 erfolgen.

Die vorliegende Erfindung hat nun den Zweck, die Kollision mit dem Hindernis H1, die einen Nichtauslösecrash darstellen kann, Sensordaten liefert, um sich gegen die Folgekollisionen zu wappnen. Dafür ist insbesondere die Gierbeschleunigung ein geeignetes Sensorsignal.

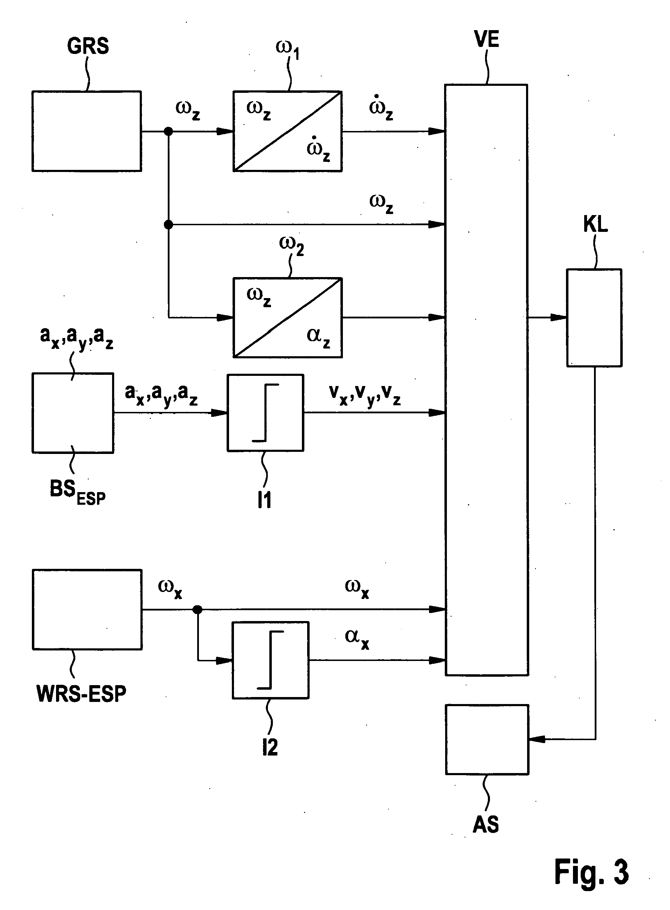

Figur 3 zeigt in einem Signalablaufdiagramm, wie verschiedene Sensorsignale zu einem Vektor zusammengefasst werden, der dann klassifiziert wird und zu dem Ansteuersignal führt. Die Gierratensensorik GRS erzeugt das Signal ωz. Das Signal ωz wird im ersten Wandler W1 differenziert, um die Gierbeschleunigung ω z zu erzeugen. Dazu kann, wie oben angegeben, ein Minimalvarianzschätzer zur Ableitung nach der Zeit verwendet werden. Diese Gierbeschleunigung ω̇**z** geht dann in den Vektorbilder VE ein. Ebenfalls in den Vektorbilder kann die Gierrate ωz selbst eingehen. Darüber hinaus ist es möglich, dass in einem zweiten Wandler W2 die Gierrate ωz durch Integration oder Aufsummierung zum Gierwinkel αz umgerechnet wird, der ebenfalls in den Vektor VE eingeht. Weitere Signale, wie die Beschleunigungssignale ax und ay bzw. az, die durch die Beschleunigungssensorik BSESP erzeugt werden, werden im Integrator I1 zu Geschwindigkeiten vx, vy, vz integriert und gehen ebenfalls in den Vektor VE ein. Weiterhin können von einer Wankratensensorik WRS-ESP die Wankrate ωx, sowie die integrierte Wankrate, d. h. der Wankratenwinkel ωx in den Vektor VE eingehen. Es können mehr oder weniger als die dargestellten Komponenten in den Vektor VE eingehen. Es ist möglich, dass auch die Nickrate und daraus abgeleitete Größen entsprechend berücksichtigt werden.

Dieser Vektor VE wird in der Klassifizierung KL klassifiziert. Dafür sind die oben angegebenen Klassifizierungsalgorithmen verwendbar. Mit der Klassifizierung kann dann das Ansteuersignal AS bestimmt werden. Dies kann dann genutzt werden, um passive Personenschutzmittel PS anzusteuern, oder das Ansteuersignal an die Fahrdynamikregelung zu übertragen, so dass Eingriffe in das Fahrzeug stattfinden, um dieses Fahrzeug zu stabilisieren.

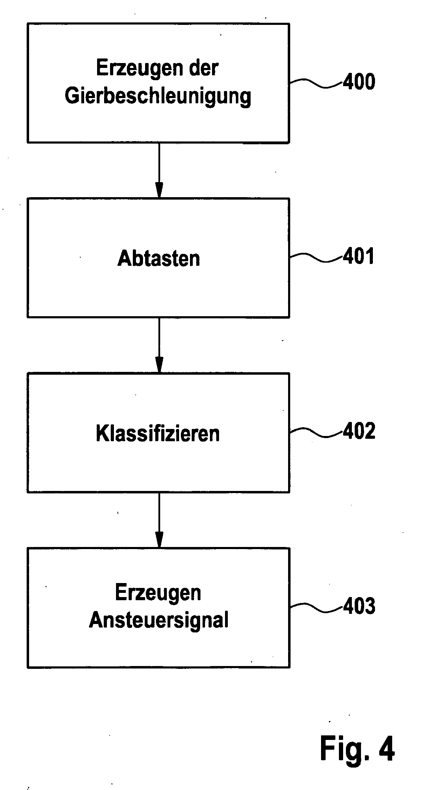

Figur 4 zeigt in einem Flussdiagramm, wie das erfindungsgemäße Verfahren abläuft. Im Verfahrensschritt 400 wird die Gierbeschleunigung in der oben gezeigten Art und Weise erzeugt. D.h. das analoge Sensorsignal wird analog differenziert, um die Gierbeschleunigung zu erhalten. Eine solche analoge Differenzierung wird beispielsweise durch dem Fachmann bekannte Operationsverstärkerschaltungen mit Widerständen und Kondensatoren realisiert. In Verfahrensschritt 401 wird diese Gierbeschleunigung abgetastet. Es ist möglich, dass zunächst das Sensorsignal abgetastet wird und dann digital mittels eines RLS- oder anderen digitalen Differenzierers die Gierbeschleunigung bestimmt wird.

In Verfahrensschritt 402 erfolgt die Klassifizierung wie für Figur 3 beschrieben. In Verfahrensschritt 403 wird dann das Ansteuersignal erzeugt und in der entsprechenden Art und Weise weiterverarbeitet, entweder zur Ansteuerung der passiven Personenschutzmittel, oder zur Ansteuerung aktiver Personenschutzmittel, die beide als Sicherheitsmittel zusammengefasst werden. Das Ansteuersignal kann auch in einem Ansteuerungsalgorithmus verwendet werden, um beispielsweise Schwellen zu beeinflussen, Funktionen des Algorithmus zu oder abzuschalten oder als Plausibilisierung zu dienen.

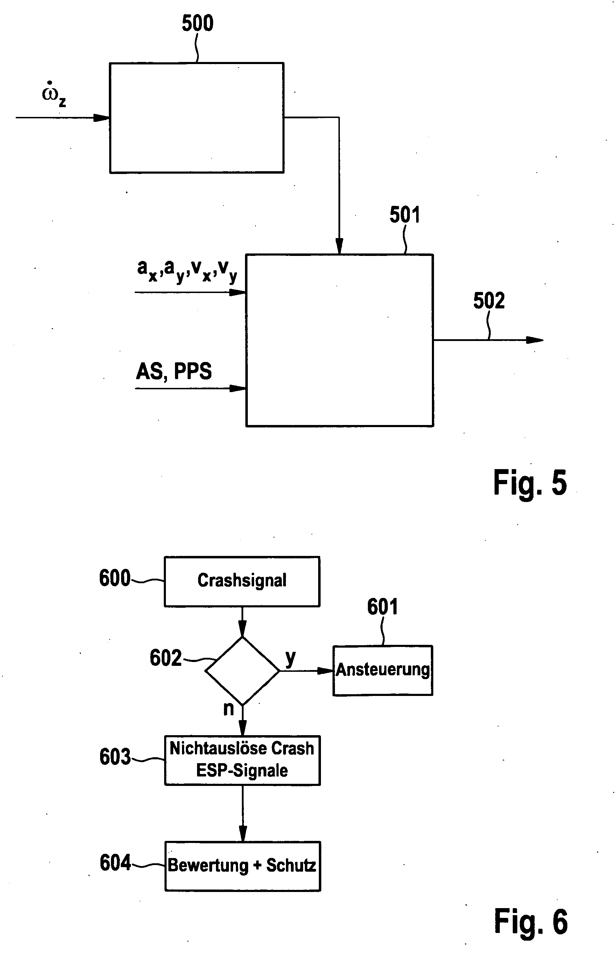

Figur 5 zeigt in einem weiteren Signalablaufdiagramm eine solche Anwendung. Die Gierbeschleunigung ω z geht in den Block 500 ein, um anhand der Gierbeschleunigung und eventuell weiterer Sensorsignale zu bestimmen, ob der Ansteuerungsalgorithmus 501 beeinflusst werden muss und wenn ja, wie. Dies kann beispielsweise durch Beeinflussung von wenigstens einem Schwellwert im Algorithmus 501 geschehen oder auch als Plausibilisierungsentscheidung oder als An- und Zuschalten von Funktionen. Der Ansteuerungsalgorithmus selbst verarbeitet die Crashsignale, beispielsweise die Beschleunigung ax, ay oder deren integrierte Werte vx, vy oder deren integrierte Werte, nämlich die Vorverlagerungen. Auch Signale von ausgelagerten Beschleunigungssensoren PAS und PPS oder auch einer Körperschallsensorik können im Ansteuerungsalgorithmus 501 verarbeitet werden, um das Ansteuerungssignal 502 zu bilden. Vorliegend kann der Ansteuerungsalgorithmus zweidimensional, beispielsweise die Vorverlagerung und der Geschwindigkeitsabbau in einem Diagramm miteinander untersucht werden.

Figur 6 zeigt eine weitere Anwendung des erfindungsgemäßen Verfahrens. In Verfahrensschritt 600 wird das Crashsignal, beispielsweise die Beschleunigungssignale, gewonnen. In Verfahrensschritt 602 wird entschieden, ob anhand des Crashsignals ein Auslösecrahs oder ein Nichtauslösecrash vorliegt. Liegt ein Auslösecrash vor, dann wird in Verfahrensschritt 601 die Ansteuerung der Personenschutzmittel vorgenommen. Liegt ein Nichtauslösecrash vor, dann wird in Verfahrensschritt 603 eine Auswertung der ESP-Signale, die im Airbagsteuergerät durch eine Sensorik erzeugt werden, vorgenommen. Dabei wird die Gierbeschleunigung ausgenutzt. Anhand der Gierbeschleunigung wird in Verfahrensschritt 604 die Fahrsituation bewertet und entsprechende Schutzmaßnahmen eingeleitet. Dazu gehören beispielsweise fahrzeugstabilisierende Maßnahmen oder auch präventive Schutzmaßnahmen, um bei Folgecrashs die Fahrzeuginsassen optimal zu schützen.

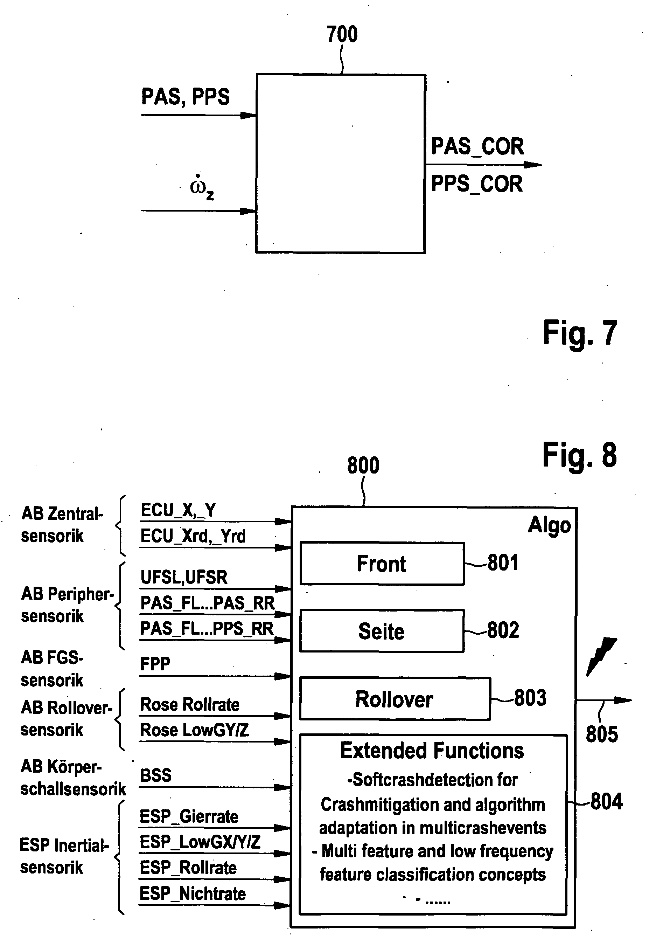

Figur 7 zeigt ein weiteres Signalablaufdiagramm für das erfindungsgemäße Verfahren. Dabei werden die Signale von ausgelagerten Beschleunigungssensoren PAS und Luftdrucksensoren PPS zur Erfassung von Seitenkollisionen in Abhängigkeit von der Gierbeschleunigung ω z im Block 700 korrigiert, so dass die Signale PAS-KOR und PPS-KOR vorliegen. Durch die Drehbewegung werden Signalanteile in den linearen Beschleunigungssensoren induziert, die mittels der Drehbeschleunigung wieder herausgerechnet werden können. Diese Korrektur vermeidet, dass sich gegebenenfalls zu niedrige Messwerte der Beschleunigungssensoren bei einem Schwellwertvergleich negativ auswirken. Daher ist eine gierbeschleunigungsbasierte Kompensation vorteilhaft.

Figur 8 zeigt in einem Signalablaufdiagramm, welche Sensorsignale beispielsweise in einen Ansteuerungsalgorithmus eingehen. Für die Crashsensierung wird eine Zentralsensorik bezüglich der Beschleunigung ECUX bzw. ECUY und ECU_XRD bzw. YRD verwendet. Mit ECU_XRD und ECU_YRD sind Beschleunigungssensoren bezeichnet, die in den entgegengesetzten Richtungen zu ECUX und ECUY empfindlich sind. Diese Sensoren werden übblicherweise zur Plausibilisierung verwendet.

Als periphere Sensorik werden Upfrontsensoren UFSL, UFSR und als Seitensensoren PAS-FL, PAS-RR bzw. Luftdrucksensoren PPS_FL, PPS_RR verwendet. Diese Sensorsignale können auch mehrfach vorliegen. Ebenso werden Signale der Fußgängerschutzsensorik EPD verwendet. Darüber hinaus werden Signale einer Rollover-Sensierung verwendet, nämlich die Rollrate bzw. die Signale von Beschleunigungssensoren, die für niedrige Beschleunigungen ausgelegt sind, und zwar in Fahrzeugquerrichtung und Fahrzeugvertikalrichtung. Auch die Signale einer Körperschallsensorik BSS können in den Algorithmus eingehen. Erfindungsgemäß werden die Signale der ESP-Inertialsensorik, nämlich die ESP_Gierrate, die ESP_GX/Y/Z, die ESP_Rollrate sowie die ESP-Nickrate ωy verwendet. Weitere Sensorsignale können verwendet werden. Dem Fachmann ist klar, dass dies nur eine Auswahl darstellt, dass mehr oder weniger solcher Sensorsignale verwendet werden können, je nach Fahrzeugtyp und Ausstattung.

Der Algorithmus 800, der beispielsweise auf den Mikrocontroller im Airbagsteuergerät abläuft, weist einige der dargestellten Softwaremodule auf. Dazu gehört ein Frontcrashmodul 801, das Frontcrashs behandelt. Weiterhin gehört dazu ein Seitencrashmodul 802, das Seitencrashes behandelt. Auch ein Rollovermodul 803 ist vorgesehen. Dafür verwendet der Fachmann die aus dem Stand der Technik bekannten Verfahren.

Ein weiteres Softwaremodul 804 weist weitere Funktionen auf, wie beispielsweise eine Softcrashdetektion, die erfindungsgemäße beschrieben wurde. Softcrashes sind beispielsweise Nichtauslösecrashes, also solche, die nicht unter Frontseite, Rollover- oder beispielsweise auch Heckaufprall subsumiert werden. Weiterhin werden erfindungsgemäß mehrere Merkmale, nämlich mindestens drei zur Klassifizierung verwendet und auch Merkmale bei niedrigen Frequenzen, beispielsweise bis 200 Hz. Am Ausgang 805 wird das Ansteuersignal für die entsprechenden Personenschutzmittel erzeugt. Der Algorithmus kann, wie oben angegeben, weitere Module aufweisen, insbesondere auch zur Ansteuerung von aktiven Personenschutzmitteln.

## Patentansprüche

1. Verfahren zur Ansteuerung von Sicherheitsmitteln (PS; ABS, ESP, LW) für ein Fahrzeug (FZ) mit folgenden Verfahrensschritten:
- Erzeugen wenigstens eines Gierbeschleunigungssignals (ω̇z) mittels einer Sensorik (ESP-S)
- Abtasten des wenigstens einen Gierbeschleunigungssignals (ω̇z) mit einer Abtastzeit von kleiner 10ms
- Erzeugen eines Ansteuersignals in Abhängigkeit von dem wenigstens einen Gierbeschleunigungssignal (ω̇z)
- **dadurch gekennzeichnet, dass** das wenigstens eine Gierbeschleunigungssignal (ω̇_{z}) derart erzeugt wird, dass das wenigstens eine Gierbeschleunigungssignal (ω̇_{z}) mittels einer Minimalvarianzmethode bestimmt wird.

2. Verfahren nach Anspruch 1, **dadurch gekennzeichnet, dass** zur Ausgabe des Ansteuersignals eine Kommunikationsschnittstelle (IF3) zum Senden und Empfangen von Daten vorgesehen ist.

3. Verfahren nach Anspruch 1, **dadurch gekennzeichnet, dass** das Ansteuersignal von einem Ansteuerungsalgorithmus (800) als Plausibilisierung oder als Schwellwertbeeinflussung verwendet wird.

4. Verfahren nach Anspruch 1, **dadurch gekennzeichnet, dass** wenigstens ein von dem wenigstens einen Gierbeschleunigungssignal (ω̇z) abgeleitete Signal in einem wenigstens dreidimensionalen Vektor (VA) eingeht und dass das Ansteuersignal in Abhängigkeit von einer Klassifizierung des dreidimensionalen Vektors (VA) erzeugt wird.

5. Verfahren nach einem der vorhergehenden Ansprüche, **dadurch gekennzeichnet, dass** in Abhängigkeit von dem wenigstens einen Gierbeschleunigungssignal (ω̇z) und wenigstens einem weiteren Sensorsignal ein Nichtauslösecrash erkannt und bewertet wird, so dass die Sicherheitsmittel (PS, ABS, ESP, LW) in Abhängigkeit von dem Ansteuersignal derart angesteuert werden, dass ein Schutz vor wenigstens einem Folgecrash erreicht wird.

6. Verfahren nach Anspruch 5, **dadurch gekennzeichnet, dass** als das wenigstens eine weitere Sensorsignal ein Gierwinkel (αz) verwendet wird.

7. Verfahren nach einem der vorhergehenden Ansprüche, **dadurch gekennzeichnet, dass** in Abhängigkeit von dem Ansteuersignal zumindest eines der weiteren Sensorsignale bewertet wird.

8. Anordnung zur Ansteuerung von Sicherheitsmitteln (PS, ABS, ESP, LW) für ein Fahrzeug (FZ) mit:
- einer Sensorik (ESP-S) zur Erzeugung wenigstens eines Gierbeschleunigungssginals (ω̇z)
- einer Auswerteschaltung (µC) zum Abtasten des wenigstens einen Gierbeschleunigungssignals (ω̇z) mit einer Abtastzeit von kleiner 10ms und zum Erzeugen eines Ansteuersignals in Abhängigkeit von dem wenigstens einen Gierbeschleunigungssignal (ω̇z)
- **dadurch gekennzeichnet, dass** das wenigstens eine Gierbeschleunigungssignal (ω̇_{z}) derart erzeugt wird, dass das wenigstens eine Gierbeschleunigungssignal (ω̇_{z}) mittels einer Minimalvarianzmethode bestimmt wird.

9. Anordnung nach Anspruch 8, **dadurch gekennzeichnet, dass** die Sensorik (ESP-S) in einem Steuergerät (ABSG) mit der Auswerteschaltung (µC) eingebaut ist.

## Claims

1. Method for actuating safety means (PS; ABS, ESP, LW) for a vehicle (FZ) having the following method steps:
- generation of at least one yaw acceleration signal (ω̇z) by means of a sensor system (ESP-S)
- sampling the at least one yaw acceleration signal (ω̇z) having a sampling time of less than 10 ms
- generation of an actuation signal as a function of the at least one yaw acceleration signal (ω̇z)
- **characterized in that** the at least one yaw acceleration signal (ω̇z) is generated in such a way that the at least one yaw acceleration signal (ω̇z) is determined by means of a minimum variance method.

2. Method according to Claim 1, **characterized in that** a communication interface (IF3) for transmitting and receiving data is provided for outputting the actuation signal.

3. Method according to Claim 1, **characterized in that** the actuating signal is used by an actuation algorithm (800) as a means of performing plausibility checking or as a means of influencing threshold values.

4. Method according to Claim 1, **characterized in that** at least one signal which is derived from the at least one yaw acceleration signal (ω̇z) is included in an at least three-dimensional vector (VA), and **in that** the actuating signal is generated as a function of classification of the three-dimensional vector (VA).

5. Method according to one of the preceding claims, **characterized in that** a non-triggering crash is detected and evaluated as a function of the at least one yaw acceleration signal (ω̇z) and at least one further sensor signal, with the result that the safety means (PS, ABS, ESP, LW) are actuated as a function of the actuation signal in such a way that protection against at least a subsequent crash is achieved.

6. Method according to Claim 5, **characterized in that** a yaw angle (αz) is used as the at least one further sensor signal.

7. Method according to one of the preceding claims, **characterized in that** at least one of the further sensor signals is evaluated as a function of the actuation signal.

8. Arrangement for actuating safety means (PS, ABS, ESP, LW) for a vehicle (FZ), having:
- a sensor system (ESP-S) for generating at least one yaw acceleration signal (ω̇z)
- an evaluation circuit (µC) for sampling the at least one yaw acceleration signal (ω̇z) with a sampling time of less than 10 ms and for generating an actuation signal as a function of the at least one yaw accelerations signal (ω̇z)
- **characterized in that** the at least one yaw acceleration signal (ω̇z) is generated in such a way that the at least one yaw acceleration signal (ω̇z) is determined by means of a minimum variance method.

9. Arrangement according to Claim 8, **characterized in that** the sensor system (ESP-S) is installed in a control unit (ABSG) with the evaluation circuit (µC).

## Revendications

1. Procédé de commande de moyens de sécurité (PS, ABS, ESP, LW) pour un véhicule (FZ) comprenant les étapes suivantes :
- génération d'au moins un signal d'accélération en lacet (ω̇z) au moyen d'un dispositif de détection (ESP-S)
- échantillonnage de l'au moins un signal d'accélération en lacet (ω̇z) avec un temps d'échantillonnage inférieur à 10 ms
- génération d'un signal de commande en fonction de l'au moins un signal d'accélération en lacet (ω̇z),
- **caractérisé en ce que** l'au moins un signal d'accélération en lacet (ω̇z) est généré de telle sorte que l'au moins un signal d'accélération en lacet (ω̇z) est déterminé au moyen d'une méthode de variance du minimum.

2. Procédé selon la revendication 1, **caractérisé en ce que** pour délivrer le signal de commande, il est prévu une interface de communication (IF3) pour émettre et recevoir des données.

3. Procédé selon la revendication 1, **caractérisé en ce que** le signal de commande est utilisé par un algorithme de commande (800) en tant que détermination de la plausibilité ou en tant qu'influence d'une valeur de seuil.

4. Procédé selon la revendication 1, **caractérisé en ce qu'**au moins un signal dérivé de l'au moins un signal d'accélération en lacet (ω̇z) intervient dans un vecteur (VA) au moins tridimensionnel et **en ce que** le signal de commande est généré en fonction d'une classification du vecteur (VA) tridimensionnel.

5. Procédé selon l'une des revendications précédentes, **caractérisé en ce qu'**une collision non déclenchée est détectée et évaluée en fonction de l'au moins un signal d'accélération en lacet ( ) et d'au moins un signal de détec ω̇**z** on supplémentaire, de sorte que les moyens de sécurité (PS, ABS, ESP, LW) soient commandés en fonction du signal de commande de manière à atteindre une protection contre au moins une collision à suivre.

6. Procédé selon la revendication 5, **caractérisé en ce que** l'au moins un signal de détection supplémentaire utilisé est un angle de lacet (αz).

7. Procédé selon l'une des revendications précédentes, **caractérisé en ce qu'**au moins l'un des signaux de détection supplémentaires est évalué en fonction du signal de commande.

8. Arrangement de commande de moyens de sécurité (PS, ABS, ESP, LW) pour un véhicule (FZ) comprenant :
- un dispositif de détection (ESP-S) pour générer au moins un signal d'accélération en lacet (**ω̇z**)
- un circuit d'interprétation (µC) pour échantillonner l'au moins un signal d'accélération en lacet (**ω̇z**) avec un temps d'échantillonnage inférieur à 10 ms et pour générer un signal de commande en fonction de l'au moins un signal d'accélération en lacet (**ω̇z**),
- **caractérisé en ce que** l'au moins un signal d'accélération en lacet (**ω̇z**) est généré de telle sorte que l'au moins un signal d'accélération en lacet (**ω̇z**) est déterminé au moyen d'une méthode de variance du minimum.

9. Arrangement selon la revendication 8, **caractérisé en ce que** le dispositif de détection (ESP-S) est intégré dans un contrôleur (ABSG) avec le circuit d'interprétation (µC).
